# EUROPEAN PATENT SPECIFICATION

(11) **EP 0 810 690 B1**
(45) Date of publication and mention of the grant of the patent: **21.05.2003**
(21) Application number: 97500031.6
(22) Date of filing: 12.02.1997
(51) Int. Cl.: H01R 9/24

(54) **Modular telephone line connecting, cutting and testing block**
Modulare Anschluss-, Schneid- und Prüfleiste für Telefonleitung
Bloc modulaire de connexion, coupage et test pour lignes téléphoniques

(30) Priority: 28.05.1996 ES 9601456 U
(43) Date of publication of application: 03.12.1997
(60) Divisional application: 02076435.3
(73) Proprietor: MONDRAGON TELECOMMUNICATIONS, S.L., 46550 Albuixech (Valencia) (ES)
(72) Inventor: Vives Clavel, Juan, c/o Plasticos Mondragon, S.A., 46550 Albuixech (Valencia) (ES)
(74) Representative: Beitsma, Gerhard Romano

(56) References cited:
- EP-A- 0 170 455
- EP-A- 0 637 853
- DE-U- 9 113 202
- FR-A- 2 530 910

## Description

### OBJECT OF THE INVENTION

The invention to which the object of this patent application relates consists of a "Modular telephone line connecting, cutting and testing block".

The word "block" as used herein means the set of connecting units between the multipair cable lying in the general network and linking up with the exchange, and the pair serving a subscriber, which are integrally moulded and therefore inseparably joined in an invariable arrangement.

As for the term "modular", such refers to the possibility of systematically interconnecting several blocks in a repetitive arrangement until a particular number of connecting units are integrated in the connection box.

### BACKGROUND OF THE INVENTION

The applicant is also the proprietor of ES-U-9400528 which is registered and in force for an "Improved telephone line connecting and testing module" representing the state of the art at the date of its registration, in which each connecting unit constitutes a free, separate part that is duly fixed to a standard omega section and has to be connected in situ to both the box lead-in multipair cable and to the subscriber pair, and to the earth connection.

Each connecting unit is per se a module, in the sense that it covers and allows all the functions attributed to the invention to be performed: connection, breaking or cutting, testing characteristics and protection.

The fact that the connecting units are separate is a solution requiring the provision of labour for them to be mounted and connected at the terminal chamber, which is important due to the relative weight this bears on the overall cost.

Furthermore, manual operations are required wherever the box is located, the number and length of which should expediently be eliminated or at least reduced.

### DESCRIPTION OF THE INVENTION

The invention subject of this patent application is aimed at finding a solution other than having the connecting units described above separately modulated, and it has been devised and designed bearing this objective in mind.

The arrangement of said units has therefore been changed and consequently the functional characteristics of the connecting boxes have been improved, contributing thereto the advantages listed and described hereinafter.

The invention is based upon the advisability of having the independence of the connecting units replaced with an inseparable grouping thereof in an invariable arrangement, by block moulding the units to form a block as defined in claim 1 hereinafter.

In developing this basic idea, a number of decisions need to be made as to the number of connecting units that should most advisably be grouped, their best arrangement in each block and the manner in which the separate blocks should be interconnected to provide them attached in the connection box.

Taking into account that each multipair cable has a pair number that is a multiple of 5, and that each pair has to be electrically attached to a connecting unit, it stands to reason that the number of units integrated in each block should be five.

This moreover makes it easier to design forms of grouping the connecting units so as to allow arrangements of linked blocks to be composed, suitable for clearly and symmetrically completing connection with the cable pair number, no matter whether this number ends in 5 or in 0, since they both require different formal solutions for the grouped units and linked blocks.

The groupings and links of the invention allow suitable connection boxes to be had for each cable composition; and this makes it easier for all boxes to be served with a multipair cable pigtail (its length being usually established by the user telephone company), the pairs therein all preconnected to the relevant connecting units and the earth connection also being preconnected to either the metallic shield of the cable or a separate earth, if any.

In the invention subject of this patent application, the pairs and earth connection are preconnected on the underside of the blocks, thereby allowing that the upwardly and downwardly displaceable conductor holders, which are the in situ connecting means of the known units the left out.

The advantages of the modular blocks subject of this patent application are summarily the following:
a) - The number of connecting units is adapted to the pair number in the cable leading from the network into the connection box where they are housed.
b) - The connection units are clearly and symmetrically arranged in the modular block, adapting to the pair number in the lead-in cable, depending upon whether the number is a multiple of 5 ending in 5 or in 0.
c) - The multipair cable conductors are preconnected to the relevant connecting units, to which end a cable pigtail of preset length is incorporated.
d) - The earth connections of each connecting unit are preconnected to either the metallic shield of the cable or to a linking point with a separate earth (a pin, for instance).
e) - Materials are saved as compared with known modules, since preconnection of pairs renders their displaceable conductor holders unnecessary.
f) - Labour is saved since preconnection of pairs renders in situ connection unnecessary.
g) - Space is saved: suppression of the pair conductor holders, which are no longer necessary, results in the size of the unit being reduced; and consequently the same number of units can fit in a smaller box or a box of the same size box may have more units fitted in than known boxes.

### DESCRIPTION OF THE DRAWINGS

In order to provide a fuller description and contribute to the understanding of the formal, structural and functional characteristics of this invention, a set of drawings is attached which schematically show various aspects of a preferred embodiment of the modular block subject of this patent application.

In said drawings:
- Figure 1 is a top plan view of two modular blocks linked along the broken (Z-shaped) connecting line marked B-B', each having five connecting units; this is hence the grouping of blocks and arrangement of units required for a ten pair cable to be connected.
   This same repeated and juxtaposed grouping would be valid for a twenty pair cable and so forth for other pair numbers being multiples of 10.
- Figure 2 is a section of the grouping of blocks of Figure 1, made along an orthogonal plane which is marked therein as A-A'.
- Figure 3 is a bottom plan view of the same grouping of Figure 1, showing the preconnections that shall be identified hereinafter.
- Figure 4 is a top plan view of a modular block with fifteen connecting units.
   The arrangement of these units in the entrance block differs from their arrangement in the entrance block of the cable of Figure 1, in order for the border thereof opposite that of the nozzle to be straight rather than broken.
   A grouping of two blocks as in Figure 1 can thus be linked to it to make up a set of 15 connecting units, which, by consecutive juxtapositions, is suitable for any pair number being a multiple of 5 and ending in 5 (15, 25, 35, etc.).

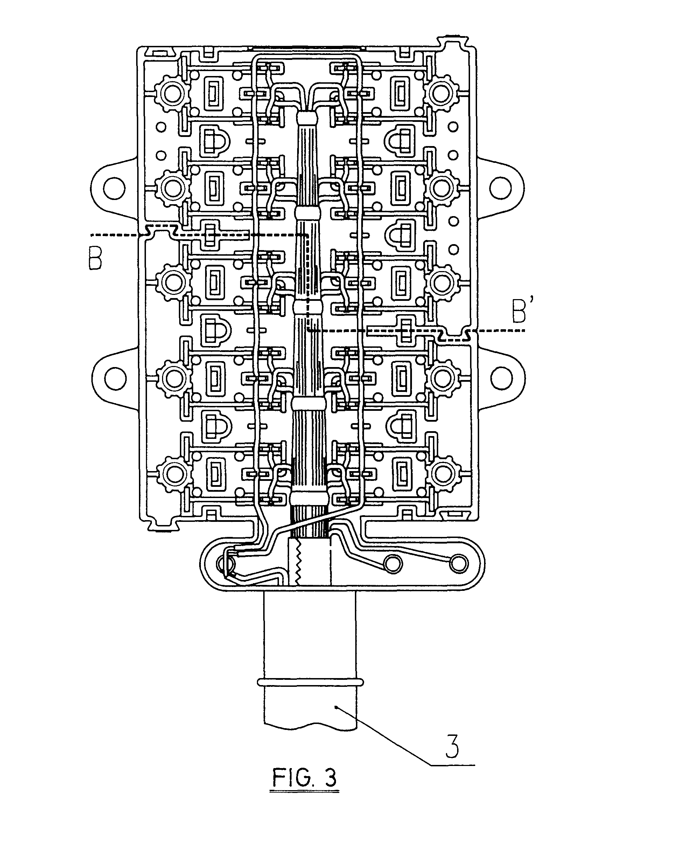

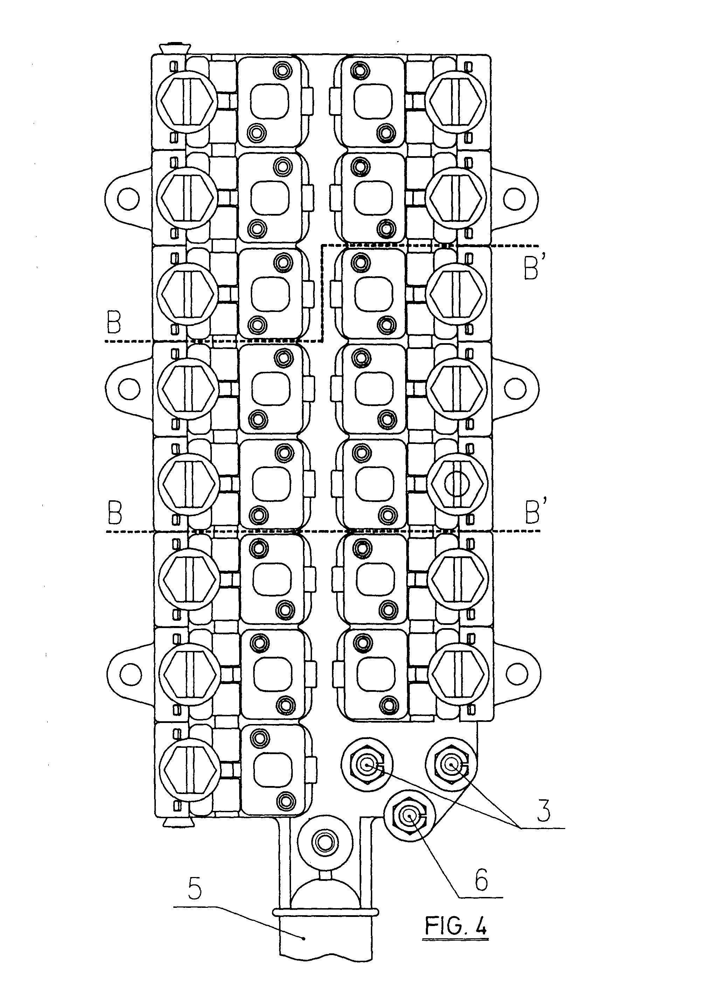

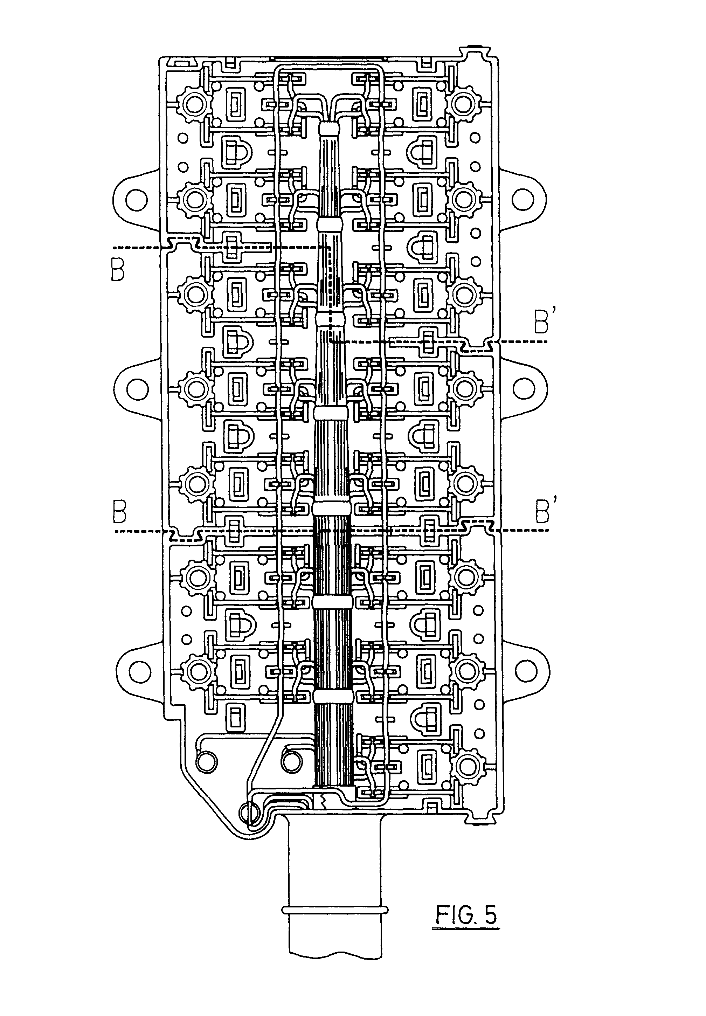

- Figure 5 is a bottom plan view of the block of Figure 4. This shows the preconnection, which is similar to that of the entrance block of the lead-in shown in Figure 3.

### PREFERRED EMBODIMENT OF THE INVENTION

In order to clearly show the nature and scope of the advantageous application of the modular block subject of the invention, its structure and operation will now be described with reference to the drawings, which show a preferred embodiment of said object, for informative purposes, and should therefore be construed in their broadest sense and not to limit the application and contents of the invention.

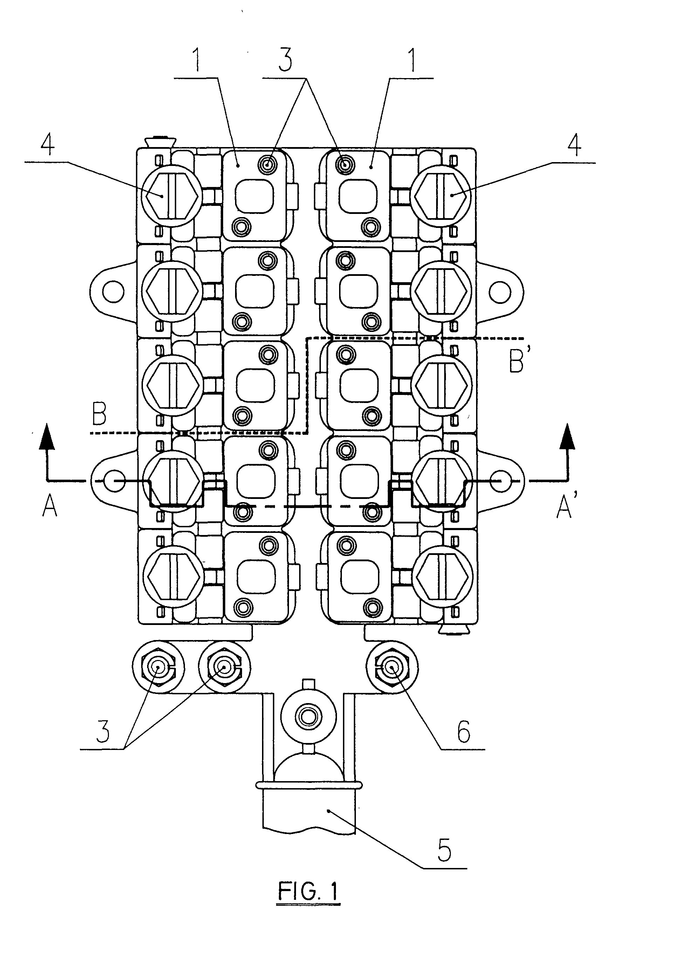

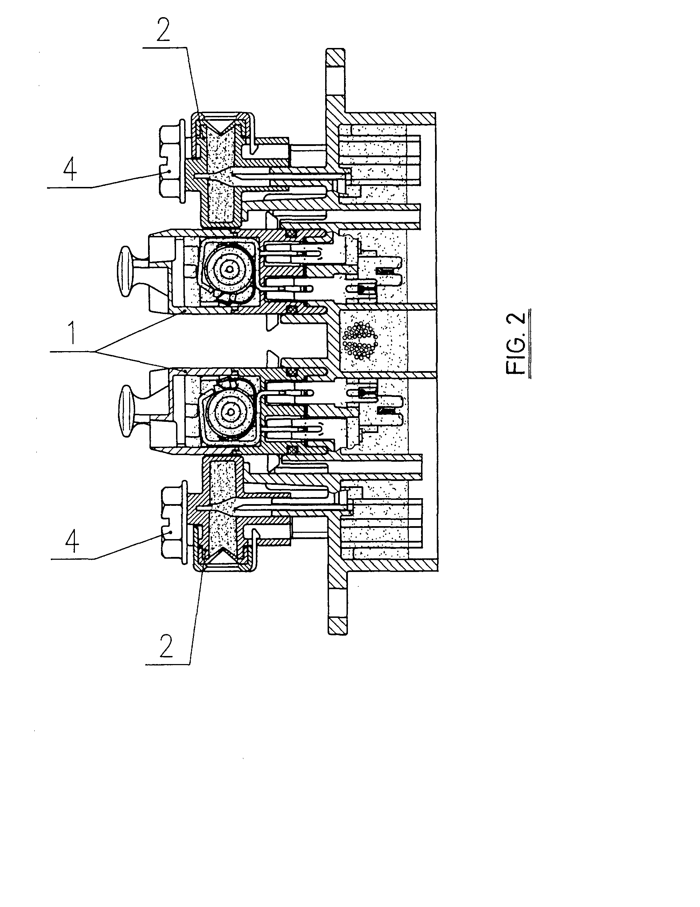

With reference to Figures 1 and 2, these show the connecting units which comprise a removable element (1) and a subscriber lead-in conductor holder (2).

Because of its pentapolar contact (two lead-in, two subscriber and one central earth terminals) the removable element (1) can contain electronic components connectable in series (frequency filter, PTC variable resistors) or in parallel (gas discharger, thyristor); and can also have no other accessory, simply acting as a continuity and cutting unit, albeit allowing line tests to be made without being removed, the line being reached by tester terminals through hollow turrets (3).

These functional characteristics are all provided for, considered and claimed in ES-U-9400528.

As for the conductor holder (2), it receives and connects or disconnects the end of each subscriber lead-in upon the central screw (4) being operated, which functions are also claimed in ES-U-9400528.

The essential feature of this patent application lies in grouping several connecting units as described to make up interconnectable moulded modular blocks.

The optimum number of units in each block is five, in order to be adapted to the composition of cables the pair number of which is a multiple of five.

The units are arranged in the blocks in two parallel rows, with inverse or specular symmetry about the longitudinal axis, the removable elements (1) lying closest to such axis and the conductor holders (2) lying further to the outside.

Since there is an odd number of units in each block, the two rows aforesaid are not the same, one having three and the other one two units. This allows two identical blocks to be connected in an inverted position, juxtaposing the units projecting from each one and forming sets of ten units.

The first modular block in each set has an entrance nozzle (5) for the multipair cable, one pair of terminals (3) (pilot pair) for connecting tester terminals, testing and speaking with the exchange, and another connecting terminal (6) for testing earthing and earth connection.

The arrangement of these elements differs depending on whether the cable pair number is a multiple of 10 or a multiple of 5 ending in 5. Indeed, in the first case, the closed and complementary configuration of the set of two blocks (10 connecting units) requires said three terminals (pilot pair and earth) to be located outside the paired units, in a separate row, as shown in Figure 1.

In the second case, however, the inverted position of the first block allows said terminals to be integrated next to the first unit, in the location taken up in the first case by the paired connecting unit, as shown in Figure 4.

This latter arrangement expedites the addition of two further linked blocks (10 units), thereby to make up a set of 15 units and, by consecutive juxtapositions, any number of units being a multiple of 5 and ending in 5 (15, 25, etc.).

The lead-in cable pairs are preconnected to the connecting units and the latter units to the earthing circuit on the underside of the blocks, as shown in Figure 3.

This system renders the pair conductor holders existing in known connecting units unnecessary, with the advantages already set out above regarding saving of materials, labour and space.

The cable pairs, with their pigtail inserted in the first block through the nozzle (5), are connected to the relevant terminals in the various units, from right to left.

The earth circuit surrounds the bottom of the blocks, connecting with the central poles in each unit, its ends being welded to the accessible contact (6) and to the metallic shield of the lead-in cable in order to allow the earthing method prescribed by each telephone company to be chosen either through the cable proper or by means of a separate earth (a pin, for instance).

Having described the nature and functional scope of the invention, and a preferred practical embodiment thereof, in sufficient detail, it is noted that the materials, shapes, size and in general any other accessory or secondary features thereof can be changed provided they do not alter, change or modify its essence, that is contained in the following claims.

## Claims

1. A modular telephone line connecting, cutting, and testing block comprising connecting units each having first connection terminals for electrical connection to a lead-in conductor pair, second connection terminals for connection to a subscriber conductor pair, and a removable pentapolar element (1) adapted to electrically connect the first connection terminals to the second connection terminals so that removal of the pentapolar element in use cuts the line, **characterised by** a grouping of the connecting units integrally moulded together to form the block with the number of connecting units in the block being a multiple of five and the units being arranged in the block in two parallel rows with inverse or specular symmetry about the longitudinal axis.

2. A block according to claim 1, **characterised by** a grouping of five of the connecting units integrally moulded together.

3. A block according to claim 2, **characterised in that** the said five connecting units are arranged in two parallel rows with three of the units in one row and two of the units in the other row and with an end unit of the three in the said one row projecting beyond an end unit of the two in the said other row such that two such blocks can be fitted together with their respective projecting end units in complementary juxtaposition to form a set often connecting units arranged in two rows of five units each.

4. A block according to any preceding claim, **characterised in that** screw actuators (4) are provided to press the conductor pairs into the connection terminals and the connection terminals are capable of displacing insulation carried by the conductors.

5. A block according to any preceding claim, **characterised in that** the said second connection terminals of each unit are associated with conductor holders (2) and actuators (4) for connecting the subscriber line pairs to the units and the said two rows of units are arranged with the conductor holders (2) lying towards the outside of the block and with the said removable elements (1) lying towards the longitudinal axis running between the two rows of units.

6. A block according to any preceding claim, **characterised in that** the lead-in cable pairs are pre-connected to the said first connection contacts and only the said second connection contacts are associated with conductor holders (2) and actuators (4) for connecting the subscriber conductor pairs to the units.

7. A set of modular telephone line connecting, cutting and testing blocks according to any preceding claim, **characterised in that** the first modular block in each set has an entrance nozzle (5) for the multipair cable, one pair of connecting terminals (3) for testing and speaking with the exchange (pilot pair), and another terminal (6) for testing earthing and earth connection, the arrangement of these elements differing depending on whether the cable pair number is a multiple of 10 or of 5 ending in 5, in which first case a closed and complementary configuration is adopted for the set of two blocks (10 units) wherein said three terminals (pilot pair and earth) are located outside the paired units, in a separate row, whereas in the second case, the inverted position of the first block allows said terminals to be integrated next to the first unit, in the location taken up in the first case by the unit paired therewith, this latter arrangement facilitating the addition of two further linked blocks, its ten units making with the five units in the first block a set of 15 units and, by consecutive juxtapositions, any number of units being a multiple of 5 and ending in 5 (15, 25, etc.).

## Patentansprüche

1. Modularer Anschluss-, Unterbrechungs- und Testblock für eine Telefonleitung, der Anschlusseinheiten umfasst, wovon jede erste Verbindungsanschlüsse zum elektrischen Anschluss an ein Zuleitungsleiterpaar, zweite Verbindungsanschlüsse zum Anschluss an ein Teilnehmerleiterpaar und ein fünfpoliges abnehmbares Element (1) aufweist, das dazu ausgelegt ist, die ersten Verbindungsanschlüsse an die zweiten Verbindungsanschlüsse elektrisch so anzuschließen, dass das Abnehmen des fünfpoligen Elements im Gebrauch die Leitung unterbricht, **gekennzeichnet durch** eine Gruppierung der Anschlusseinheiten, die integral miteinander geformt sind, um den Block auszubilden, wobei die Anzahl der Anschlusseinheiten in dem Block ein Vielfaches von fünf ist, und die Einheiten in dem Block in zwei parallelen Reihen spiegelverkehrt oder spiegelbildlich symmetrisch um die Längsachse angeordnet sind.

2. Block nach Anspruch 1, **gekennzeichnet durch** eine Gruppierung von fünf der integral miteinander geformten Anschlusseinheiten..

3. Block nach Anspruch 2, **dadurch gekennzeichnet, dass** diese fünf Anschlusseinheiten in zwei parallelen Reihen mit drei der Einheiten in einer Reihe und zwei der Einheiten in der anderen Reihe angeordnet sind, und wobei eine Endeinheit der drei Einheiten in der einen Reihe über eine Endeinheit der zwei Einheiten in der anderen Reihe derart übersteht, dass zwei solcher Blöcke mit ihren jeweiligen überstehenden Endeinheiten in komplementärer Aneinanderreihung zusammengebaut werden können, um einen Satz von zehn Anschlusseinheiten zu bilden, die in zwei Reihen von jeweils fünf Einheiten angeordnet sind.

4. Block nach einem der vorhergehenden Ansprüche, **dadurch gekennzeichnet, dass** Schraubenstellglieder (4) vorgesehen sind, um die Leiterpaare in die Verbindungsanschlüsse zu pressen, und die Verbindungsanschlüsse in der Lage sind, eine von den Leitern getragene Isolierung zu verschieben.

5. Block nach einem der vorhergehenden Ansprüche, **dadurch gekennzeichnet, dass** die zweiten Verbindungsanschlüsse jeder Einheit Leiterklemmen (2) und Stellgliedern (4) zugeordnet sind, um die Paare der Teilnehmerleitung an die Einheiten anzuschließen, und die beiden Reihen von Einheiten so angeordnet sind, dass die Leiterklemmen (2) zum Äußeren des Blocks hin liegen, und die abnehmbaren Elemente (1) zur zwischen den beiden Reihen von Einheiten verlaufenden Längsachse hin liegen.

6. Block nach einem der vorhergehenden Ansprüche, **dadurch gekennzeichnet, dass** die Paare der Zuleitungskabel mit den ersten Anschlusskontakten vorverdrahtet sind, und nur die zweiten Anschlusskontakte Leiterklemmen (2) und Stellgliedern (4) zugeordnet sind, um die Paare der Teilnehmerleitung an die Einheiten anzuschließen.

7. Satz modularer Anschluss-, Unterbrechungs- und Testblöcke für eine Telefonleitung nach einem der vorhergehenden Ansprüche, **dadurch gekennzeichnet, dass** der erste modulare Block in jedem Satz einen Eingangskanal (5) für das mehrpaarige Kabel, ein Paar Verbindungsanschlüsse (3) zum Testen und Kommunizieren mit der Vermittlungszentrale (Steuerpaar), und einen weiteren Anschluss (6) zum Testen der Erdung und zum Erdungsanschluss aufweist, wobei sich die Anordnung dieser Elemente verändert je nachdem ob die Paarzahl des Kabels ein Vielfaches von 10 oder von 5 ist und auf 5 endet, wobei im ersten Fall eine geschlossene und komplementäre Konfiguration für den Satz von zwei Blöcken (10 Einheiten) angenommen wird, bei dem die drei Anschlüsse (Steueranschlusspaar und Erdungsanschluss) außerhalb der paarigen Einheiten in einer gesonderten Reihe angeordnet sind, wohingegen es im zweiten Fall die umgekehrte Position des ersten Blocks den Anschlüssen ermöglicht, nahe bei der ersten Einheit an der Stelle eingebaut werden zu können, die im ersten Fall die damit gepaarte Stellung eingenommen hat, wobei diese letztere Anordnung das Hinzufügen zwei weiterer miteinander verschalteter Blöcke erleichtert, dessen zehn Einheiten mit den fünf Einheiten im ersten Block einen Satz von 15 Einheiten, und durch aufeinanderfolgende Aneinanderreihungen, jede beliebige Anzahl an Einheiten ergeben, die ein Vielfaches von 5 sind und auf 5 enden (15, 25, etc.).

## Revendications

1. Bloc modulaire de connexion de coupure et d'essai de lignes téléphoniques comprenant des modules de connexion comportant chacun des premières bornes de connexion pour connexion électrique à une paire de conducteurs d'entrée, des secondes bornes de connexion pour connexion à une paire de conducteurs d'abonné et un élément pentapolaire amovible (1) apte à connecter électriquement les premières bornes de connexion aux secondes bornes de connexion, de sorte que, en utilisation, l'enlèvement de l'élément pentapolaire coupe la ligne, **caractérisé par** un groupement des modules de connexion moulés d'une seule pièce les uns avec les autres pour former le bloc, le nombre de modules de connexion du bloc étant un multiple de cinq et les modules étant agencés dans le bloc en deux rangées parallèles avec une symétrie inversée ou spéculaire autour de l'axe longitudinal.

2. Bloc selon la revendication 1, **caractérisé par** un groupement de cinq des modules de connexion moulés d'une seule pièce les uns avec les autres.

3. Bloc selon la revendication 2, **caractérisé en ce que** lesdits cinq modules de connexion sont agencés en deux rangées parallèles, trois des modules dans une rangée et deux des modules dans l'autre rangée, et un module d'extrémité des trois modules de ladite première rangée faisant saillie au-delà d'un module d'extrémité des deux modules de ladite autre rangée, de sorte que deux de ces blocs peuvent être montés conjointement, leurs modules d'extrémité en saillie respectifs étant en juxtaposition complémentaire pour former un ensemble de dix modules de connexion agencés en deux rangées de cinq modules chacune.

4. Bloc selon l'une quelconque des revendications précédentes, **caractérisé en ce que** l'on a prévu des actionneurs à vis (4) pour presser les paires de conducteurs dans les bornes de connexion, et **en ce que** les bornes de connexion sont capables de dénuder l'isolant porté par les conducteurs.

5. Bloc selon l'une quelconque des revendications précédentes, **caractérisé en ce que** lesdites secondes bornes de connexion de chaque module sont associées à des dispositifs (2) de maintien de conducteurs et à des actionneurs (4) dans le but de connecter les paires de lignes d'abonné aux modules, et **en ce que** lesdites deux rangées de modules sont agencées, les dispositifs (2) de maintien de conducteurs se trouvant à l'extérieur du bloc et lesdits éléments amovibles (1) se trouvant vers l'axe longitudinal s'étendant entre les deux rangées de modules.

6. Bloc selon l'une quelconque des revendications précédentes, **caractérisé en ce que** les paires de câble d'entrée sont connectées au préalable auxdits premiers contacts de connexion et **en ce que** seuls lesdits seconds contacts de connexion sont associés à des dispositifs (2) de maintien de conducteurs et à des actionneurs (4) dans le but de connecter les paires de conducteurs d'abonné aux modules.

7. Ensemble de blocs modulaires de connexion de coupure et d'essai de lignes téléphoniques selon l'une quelconque des revendications précédentes, **caractérisé en ce que** le premier bloc modulaire de chaque ensemble comporte une buse (5) d'entrée destinée au câble multipaire, une paire de bornes (3) de connexion d'essai et de conversation avec le central téléphonique (paire pilote), et une autre borne (6) d'essai de mise à la terre et de connexion de terre, l'agencement de ces éléments différant en fonction du fait que le nombre de paires de câble est un multiple de 10 ou de 5 se terminant par 5, dans lequel premier cas on adopte une configuration fermée et complémentaire pour l'ensemble de deux blocs (10 modules), dans laquelle lesdites trois bornes (paire pilote et terre) sont situées à l'extérieur des modules appariés, dans une rangée distincte, tandis que dans le second cas, la position inversée du premier bloc permet d'intégrer lesdites bornes à la suite du premier module, à l'emplacement que prend dans le premier cas le module apparié avec celui-ci, ce dernier agencement facilitant l'addition de deux blocs de liaison supplémentaires, ses dix modules établissant avec les cinq modules du premier bloc un ensemble de 15 modules et, par juxtapositions consécutives, un nombre quelconque de modules qui est un multiple de 5 et se terminant par 5 (15, 25, etc.).
